# EUROPÄISCHE PATENTSCHRIFT

(11) **EP 1 327 383 B1**
(45) Veröffentlichungstag und Bekanntmachung des Hinweises auf die Patenterteilung: **02.04.2008**
(21) Anmeldenummer: 02028179.6
(22) Anmeldetag: 19.12.2002
(51) Int. Cl.: A01D 75/20, A01D 34/90

(54) **Vorrichtung zum Rasentrimmen**
Lawn trimmer
Debroussailleuse

(30) Priorität: 09.01.2002 DE 10201233
(43) Veröffentlichungstag der Anmeldung: 16.07.2003
(73) Patentinhaber: GARDENA Manufacturing GmbH, 89079 Ulm (DE)
(72) Erfinder: Locher, Ottmar, 89079 Ulm-Donaustetten (DE); Rudolf, Peter, 89250 Senden (DE)
(74) Vertreter: Patentanwälte Ruff, Wilhelm, Beier, Dauster & Partner

(56) Entgegenhaltungen:
- DE-A- 4 344 570
- US-A- 5 010 720
- US-A- 5 048 187
- US-A- 5 060 383
- US-A- 5 423 126
- US-A- 5 996 234

## Beschreibung

Die Erfindung betrifft eine Vorrichtung zum Rasentrimmen, mit einem an einem Antriebsgehäuse angebrachten rotierenden Schneidwerkzeug, insbesondere einem Schneidfaden, dessen Rotationsbahn auf einen Umfangsabschnitt von einer Schutzhaube und auf einen gegenüberliegenden Umfangsabschnitt von einem Kreisbogenabschnitt einer Schutzeinrichtung überdeckt ist, die in eine Nichtgebrauchstellung verschwenkbar ist, wobei die Schutzeinrichtung zwischen ihrer Gebrauchsstellung und ihrer Nichtgebrauchstellung um eine im wesentlichen zu der Rotationsachse des Schneidfadens parallele Schwenkachse verstellbar ist.

Aus der US-A 5,060,383 ist eine gattungsgemäße Vorrichtung bekannt, bei der am Antriebsgehäuse ein erster Ausleger befestigt ist, an welchem ein zweiter Ausleger mit einem daran befestigten Schutzring schwenkbar angelenkt ist. Der Schutzring kann mitsamt dem zweiten Ausleger zwischen einer nach vorne verschwenkten und einer hinten verschwenkten Lage bewegt werden, wobei die dafür vorgesehene Schwenkachse zwischen dem ersten und dem zweiten Ausleger in etwa senkrecht ausgerichtet ist.

Aus der US-A 5 010 720 in eine Vorrichtung bekannt, bei der ein Fadenschneider in einem am unteren Ende eines Führungsrohres anschließenden, mit einem Getriebe versehenen Antriebsgehäuse untergebracht ist. Der Antrieb zum Getriebe erfolgt durch das Rohr hindurch von einem Verbrennungsmotor, der am oberen Ende des Führungsrohres angeordnet ist.

Der mit dem am unteren Ende des Führungsrohres angeordneten Antriebsgehäuse verbundene Fadenschneider wird auf der zur Bedienungsperson, die das Führungsrohr an einem Handgriff halten kann, weisenden Seite von einer Schutzhaube in Form eines Schildes überdeckt. An dem Führungsrohr ist im Bereich des Antriebsgehäuses mit Hilfe einer Schraubklemme eine Schutzeinrichtung in der Form eines Bügel befestigt, der zwei etwa parallel zueinander verlaufende freie Enden aufweist und mit diesen an der Klemme gehalten ist. Von den freien Enden aus geht der Bügel in einen Kreisbogenabschnitt über, dessen Radius dem Radius der Rotationsbahn des Fadenschneiders in etwa angepasst ist. Dieser Bügel, der sich von seinen freien Schenkeln aus nach außen erweitert, ist so ausgelegt, dass er mit seinem Kreisbogenabschnitt radial über die Rotationsbahn des Fadenschneiders vorsteht und auf diese Weise der Bedienungsperson zum einen einen sichtbaren Bereich vorgibt, in dem sich der Fadenschneider bewegt und zum anderen aber auch als Schutzeinrichtung dient, um das Berühren des freien Endes des Fadenschneiders mit empfindlichen oder festen Hindernissen, wie beispielsweise Bäumen und Sträuchern verhindert, um eine Beschädigung sowohl am Hindernis als auch am Fadenschneider auszuschließen.

Der Bügel lässt sich bei der bekannten Vorrichtung um seine Klemme nach oben verschwenken, so dass sein kreisbogenförmiger Abschnitt, der in der Gebrauchstellung parallel oberhalb der Rotationsbahn des Schneidwerkzeuges verläuft, in einer Nichtgebrauchstellung bis zur Anlage am Führungsrohr verschwenkt werden kann.

Die Art der Befestigung des Bügels ist bei der bekannten Bauart relativ aufwendig. Dazu kommt, dass der Bügel auch in der Nichtgebrauchstellung vom Gerät in sperriger Weise absteht.

Bekannt ist es auch (DE 43 44 570 A1), bei einem Rasentrimmer einen Drahtbügel vorzusehen, dessen freie Schenkel unmittelbar auf der Oberfläche der Schutzhaube in entsprechende Halterungen einrastbar sind. Bei einer solchen Ausführung entfällt zwar eine Befestigung an einem Führungsrohr, das Einrasten der freien Bügelenden jedoch in unterschiedliche Raststellen erfordert einige Aufmerksamkeit der Bedienungsperson und ist daher ebenfalls nicht ohne Aufwand durchzuführen. Der Rasentrimmer dieser Bauart weist allerdings den Vorteil auf, dass der Drahtbügel in der Nichtgebrauchslage im Bereich der Schutzhaube und auf dieser gehalten ist, so dass eine kompakte Anordnung gegeben ist.

Der vorliegenden Erfindung liegt die Aufgabe zugrunde, bei einer Vorrichtung der eingangs genannten Art die Schutzeinrichtung so anzuordnen, dass eine äußerst einfache Handhabung möglich ist, wobei darauf geachtet werden soll, dass die Schutzeinrichtung auch dann, wenn sie in der Nichtgebrauchstellung ist, keinen zusätzlichen Platz beansprucht.

Zur Lösung dieser Aufgabe wird bei einer Vorrichtung der eingangs genannten Art vorgesehen, dass die Schutzeinrichtung federnd am Umfang eines zwischen Antriebsgehäuse und Schutzhaube verlaufenden Schaftes gehalten und um diesen Schaft verschwenkbar ist und die Schutzeinrichtung über zwei Schenkel aus einem elastisch federnden Material verfügt, die in Bogenform so ausgebildet sind, dass sie dem äußeren Umfang des Schaftes auf gegenüberliegenden Seiten in ihrer Krümmung angepasst sind. Diese Ausgestaltung eröffnet die einfache Möglichkeit, die Schutzeinrichtung in der Ebene, in der sie in ihrer Gebrauchstellung steht, um 180° nach hinten, also zur Bedienerseite hin, zu verschwenken, was von der Bedienungsperson ohne größere Aufmerksamkeit in einfacher Weise durchgeführt werden kann.

In Weiterbildung der Erfindung kann die Schutzeinrichtung dabei sowohl in der Gebrauchsstellung als auch in der Nichtgebrauchsstellung rastend gehalten sein, so dass kein Aufwand für die Fixierung der Schutzeinrichtung in ihrer jeweiligen Stellung notwendig ist. Die Schwenkachse der Schutzeinrichtung kann dabei exakt parallel oder sogar mit der Rotationsachse des Schneidfadens zusammenfallend ausgebildet sein. Zweckmäßig wird sie jedoch etwas gegenüber der Rotationsachse des Schneidfadens geneigt, allerdings um nicht mehr als einen Winkel von 15°. Dann kann die Neigung der Schwenkachse bei einer solchen Ausgestaltung so gewählt sein, dass der Kreisbogenabschnitt der Schutzeinrichtung in der Gebrauchsstellung näher an der von der Rotationsbahn des Schneidfadens bestimmten Schneidebene liegt, als in der Nichtgebrauchsstellung.

In Weiterbildung der Erfindung kann zwischen dem Antriebsgehäuse und der Schutzhaube ein den Schaft umgebender Spalt vorhanden sein, der als Führung für die Schwenkbewegung der Schutzeinrichtung dient. Auch diese Ausgestaltung erleichtert die Handhabung.

In Weiterbildung der Erfindung kann die Schutzeinrichtung als Bügel ausgebildet sein, dessen freie Enden mit gegenüberliegenden Vorsprüngen oder Vertiefungen am Umfang des Schaftes formschlüssig zusammenwirken. Wenn der Bügel in einfacher Weise aus elastisch federndem Material besteht, so ergibt sich eine sehr einfache Bauart, die es erlaubt, den Bügel in seiner Befestigungsebene zu drehen, wobei sich die zunächst formschlüssig unter Federkraft in den Vertiefungen oder Vorsprüngen gehaltenen Teile der Bügelschenkel aus dessen Vertiefungen oder von den Vorsprüngen federnd lösen und nach der Verschwenkung in eine Nichtgebrauchsstellung erneut einrasten.

Besonders vorteilhaft wird die Ausgestaltung nach der Erfindung, wenn die Vorsprünge oder Vertiefungen identisch und diametral gegenüberliegend ausgebildet und so ausgerichtet sind, dass der Kreisbogenabschnitt des Bügels in dessen Gebrauchstellung radial über den von der Bedienungsperson abgewandten Teil der Rotationsbahn des Schneidwerkzeuges hinausragt, in der gegenüber dieser Gebrauchstellung verdrehten Nichtgebrauchstellung dagegen noch im Bereich der Schutzhaube und auf dieser aufliegt, so dass der Kreisbogenabschnitt in etwa mit dem Außenrand der Schutzhaube fluchtet. Die Schutzeinrichtung nimmt dann in der Nichtgebrauchstellung keinen zusätzlichen Raum ein und das Gesamtgerät bleibt kompakt.

Die Erfindung ist anhand eines Ausführungsbeispiels in den Zeichnungen dargestellt und wird im folgenden erläutert. Es zeigen:
- Fig. 1: eine perspektivische Ansicht einer Vorrichtung zum Rasentrimmen nach der Erfindung mit einer Schutzeinrichtung in der Form eines Bügels in der Gebrauchstellung,
- Fig. 2: die Seitenansicht des Gerätes nach Fig. 1,
- Fig. 3: einen Längsschnitt durch das Gerät der Fig. 1 in der Mittelebene desselben,
- Fig. 4: eine Draufsicht auf das Gerät nach Fig. 1 im Sinn des Pfeiles IV der Fig. 2,
- Fig. 5: die schematische Darstellung eines Schnittes längs der Linie V-V in Fig. 2,
- Fig. 6: eine Draufsicht ähnlich Fig. 4, jedoch mit einem um 180° verschwenkten Bügel und
- Fig. 7: schließlich die Darstellung eines Schnittes ähnlich Fig. 5, jedoch mit dem nach Fig. 6 in die Nichtgebrauchsstellung verschwenkten Bügel.

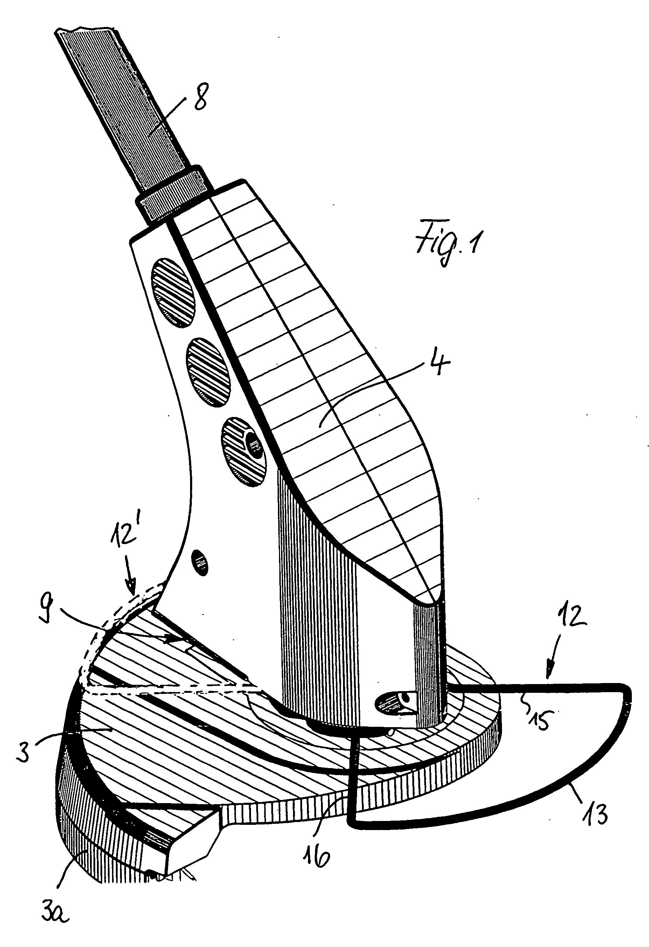

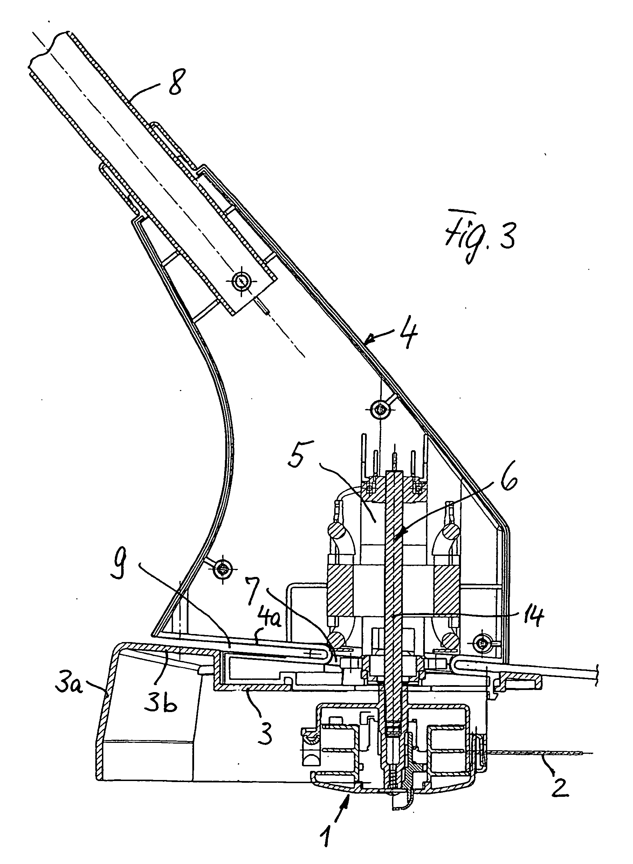

Die Fig. 1 bis 3 zeigen den Fußteil eines Rasentrimmers, der - siehe Fig. 3 - mit einer rotierenden Trommel 1 versehen ist, auf der ein Faden aufgewickelt ist, dessen freies Ende 2 von der Trommel 1 absteht und bei der mit hoher Geschwindigkeit erfolgenden Rotation der Trommel 1 in bekannter Weise zum Abschneiden von Gras oder Unkraut dient.

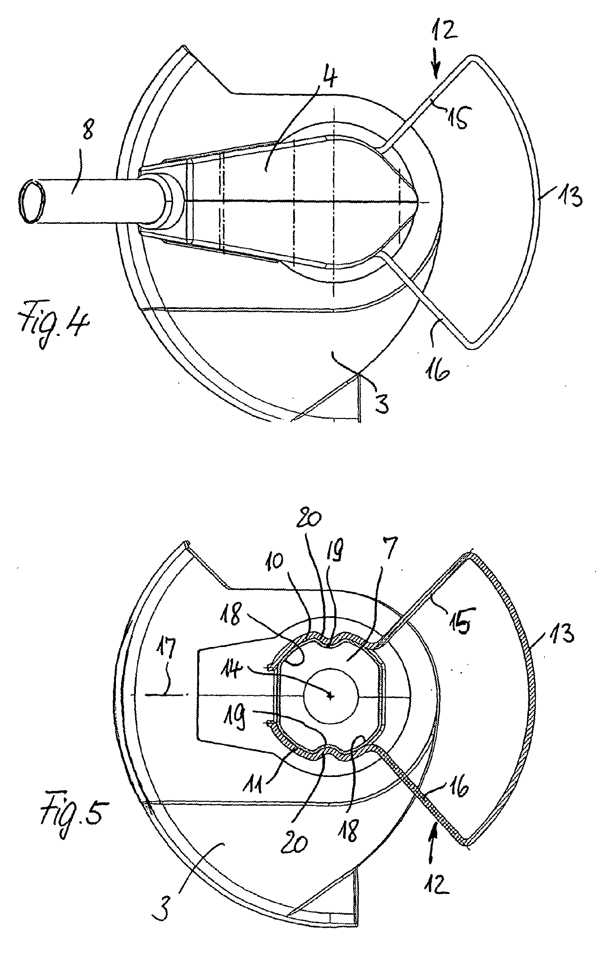

Die rotierende Trommel 1 und der mit ihr verbundene Schneidfaden sind von einer Schutzhaube 3 überdeckt, die mit einem als Schutzschild dienenden Rand 3a auf einer Seite versehen ist, um eine Bedienungsperson von abgeschleuderten Teilen zu schützen, auf der anderen Seite jedoch für den Mäh- oder Trimmvorgang frei bleibt und den Rotationsbereich des freien Fadens 2 nur nach oben abdeckt. Die Schutzhaube 3 ist fest mit einem Antriebsgehäuse 4 verbunden, in dem, wie Fig. 3 zeigt, ein elektrischer Antriebsmotor 5 untergebracht ist, dessen Welle 6 drehfest mit der Trommel 1 verbunden ist. Schutzhaube 3 und Antriebsgehäuse 4 stehen dabei über einen Schaft 7 untereinander in Verbindung, dessen Querschnitt in Fig. 5 zu erkennen ist. Das Antriebsgehäuse 4 nimmt eine Führungsstange 8 auf, die rohrförmig ausgebildet ist und stabil und fest mit dem Antriebsgehäuse 4 verbunden wird. Durch diese hohle Führungsstange 8 erfolgt über ein nicht gezeigtes Kabel die Zuführung der elektrischen Energie zum Motor 5.

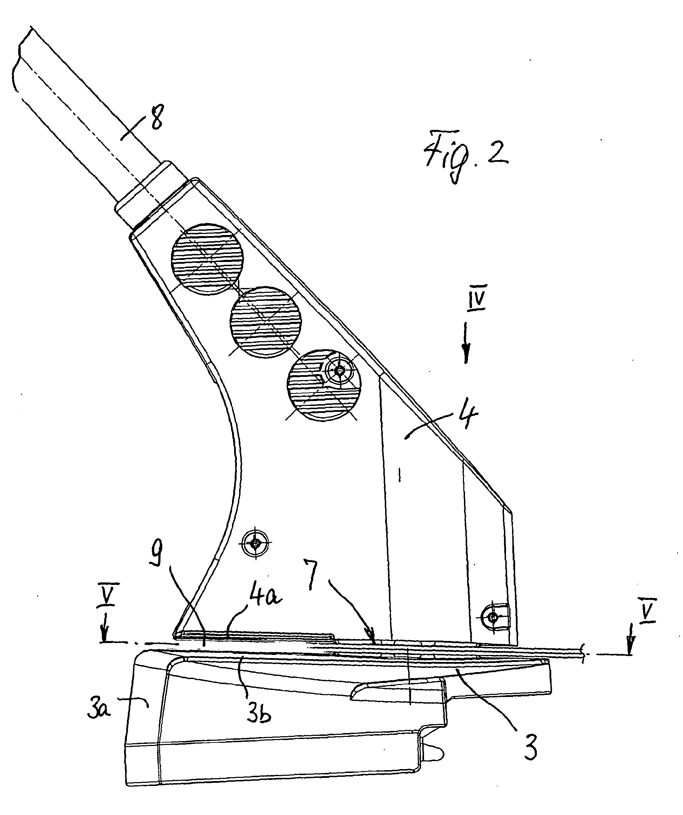

Wie die Fig. 2 und 3 zeigen, erfolgt die Verbindung zwischen Antriebsgehäuse 4 und Schutzhaube 3 ausschließlich über den Schaft 7, während zwischen der Unterseite 4a des Antriebsgehäuses und der Oberseite 3b der Schutzhaube 3 ein Spalt 9 verbleibt.

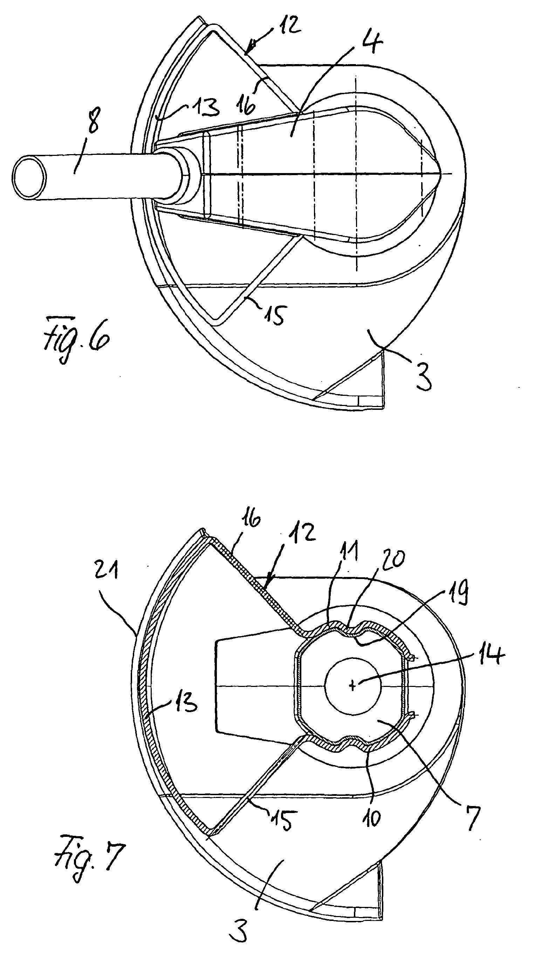

In diesen Spalt 9 sind, wie insbesondere die Fig. 5 und 7 zeigen, die freien Schenkel 10 und 11 eines Bügels 12 eingeschoben, der aus elastisch federndem Material, beispielsweise aus Stahldraht, hergestellt ist und einen kreisbogenförmigen Abschnitt 13 aufweist, der bezogen auf die Rotationsachse 14 der Welle 6 einen Radius aufweist, der etwas größer ist als der Abstand des freien Endes des Schneidfadens 2 von dieser Achse. Der Kreisbogenabschnitt 13 des Bügels 12 übergreift daher radial die Rotationsbahn des Schneidfadens 2. Wie die Fig. 5 ebenfalls erkennen lässt, geht der Kreisbogenabschnitt 13 des Bügels 12 jeweils einteilig über zwei etwa rechtwinklig zum Bügelteil 13 abgebogene Verbindungsstege 15 und 16 in die beiden freien Enden 10 und 11 des Bügels 12 über.

Die freien Enden 10 und 11 sind spiegelsymmetrisch zur Längsmittelebene 17 des Gerätes ausgebildet und, wie Fig. 5 zeigt, in Bogenform so ausgebildet, dass sie dem äußeren Umfang des Schaftes 7 auf gegenüberliegenden Seiten in ihrer Krümmung angepasst sind. Der Schaft 7 ist dabei, wie ebenfalls Fig. 5 oder 7 zeigen, auf zwei diametral der Längsmittelebene 17 gegenüberliegenden Seiten jeweils mit einer bogenförmigen Außenwand 18 versehen, deren Bogen einem Kreisbogen um die Achse 14 entspricht. In beiden bogenförmigen Wandteilen 18 ist jeweils eine ebenfalls kreisbogenförmige Einbuchtung 19 vorgesehen, in die jeweils passend eine Eindellung 20 in den bogenförmigen freien Schenkeln 10, 11 des Bügels 12 hereingreift und unter der Federwirkung des Bügelmaterials formschlüssig in dieser Lage gehalten wird. Der Bügel 12 ist daher in seiner Stellung nach den Fig. 1 bis 5 unter Federkraft formschlüssig in der dargestellten Lage gehalten, in der er die Rotationsbahn des Schneidfadens 2 außen überragt. Der Bügel 12 kann in dieser Stellung daher für die Bedienungsperson eine Orientierungshilfe dafür geben, wo der Schneidfaden sich während seiner Rotation befindet. Der Bügel kann außerdem als Schutz dafür wirken, dass der rotierende Schneidfaden nicht selbst an festen Hindernissen zu Schaden kommt oder festeren Hindernissen, wie beispielsweise Baumstämmen oder Sträucherstämmen, Schaden zufügt.

Wie in Fig. 1 aber schon gestrichelt angedeutet ist, lässt sich der Bügel 12 aufgrund der Ausgestaltung des Schaftes 7 und des Spaltes 9, der eine Führung für den Bügel bildet und diesen im wesentlichen in einer Ebene hält, auch um 180° aus der Lage nach Fig. 5 und 4 in die Lage nach den Fig. 7 und 6 verschwenken, wo ebenfalls wieder eine stabile Endlage durch das Einrasten der Eindellungen 20 in die Vertiefungen 19 des Schaftes 78 erreicht wird. In allen Zwischenlagen werden die freien Enden 10 und 11 an der Außenwand des Schaftes 7 und jeweils an der Unterseite 4a des Antriebsgehäuses 4 bzw. der Oberseite 3b der Schutzhaube 3 geführt, welche den Spalt 9 begrenzen, dessen Breite so ausgelegt ist, dass der Bügel 12 frei beweglich im Spalt 9 geführt werden kann. Dies bedeutet, dass der Spalt 9 eine Breite aufweisen muss, die etwas größer ist als die Materialstärke des aus Stahldraht gebogenen Bügels 12. Es empfiehlt sich, hierzu auch den Bügel 12 aus einem Runddraht zu formen.

Die Fig. 2 und 3 zeigen auch, dass der Spalt 9, der die Schwenkebene für den Bügel 12 nach oben und unten begrenzt, nicht unter einen Winkel von 90° zu der Rotationsachse 14 des Schneidfadens 2 verläuft, sondern etwas geneigt zu einer solchen lotrecht zur Rotationsachse stehenden Ebene ist. Die Schwenkachse 21 des Bügels 12, die senkrecht zu der Ebene des Spaltes 9 steht und in Fig. 3 schematisch angedeutet ist, ist daher zur Rotationsachse 14 ebenfalls geneigt, und zwar so, dass der Kreisbogenabschnitt 13 des Bügels 12 in dessen Gebrauchsstellung - Fig. 1 bis 5 - näher an der von der Rotationsbahn des Schneidfadens 2 bestimmten Schneidebene steht als in der Nichtgebrauchsstellung nach den Fig. 6 und 7. Der Winkel α zwischen Rotationsachse 14 und der Schwenkachse 21 sollte allerdings nicht größer als 15° sein, um eine zu schräge Lage des Bügels zur Schneidebene zu vermeiden.

Die Fig. 6 und 7 lassen nun erkennen, dass der Bügel 12 in seiner Nichtgebrauchstellung mit seinem kreisbogenförmigen Abschnitt 13 noch innerhalb des äußeren Randes 21 der Schutzhaube 3 liegt und so keinen zusätzlichen Raum beansprucht. Er lässt sich ohne Aufwand aus der Lage der Fig. 6 und 7 von Hand wieder zurückdrehen in seine Stellung nach den Fig. 4 und 5.

Erwähnt werden soll noch, dass die Führungsstange 8 in ihrem oberen Bereich in an sich bekannter Weise mit Handgriffen zur Führung durch eine Bedienungsperson versehen ist. Die Bedienungsperson steht daher wegen der schrägen Anordnung der Führungsstange 8 auf der vom Schutzschild 3a umgebenen Seite der Schutzhaube 3. In der Gebrauchstellung nach den Fig. 4 und 5 liegt der Kreisbogenabschnitt 13 des Bügels 12 auf der von der Bedienungsperson abgewandten Seite. Die neue Ausgestaltung erlaubt eine sehr einfache Handhabung des Geräts und eine Umstellung des Schutzbügels aus einer Gebrauch- in eine Nichtgebrauchstellung.

Es wird aufgrund der vorstehenden Beschreibung des Ausführungsbeispiels aber auch klar, dass anstelle des gezeigten offenen Bügels auch eine Ausgestaltung eines Bügels mit untereinander verbundenen Enden 10 und 11 vorgesehen sein könnte, wenn nur dafür gesorgt ist, dass die Schwenkbereiche mit den Eindellungen so elastisch federnd ausgebildet bleiben. Auch eine scheibenartige Ausbildung einer Schutzeinrichtung, die eine dem Querschnitt des Schaftes 7 angepasste Öffnung mit seitlichen Rastelementen aufweist, wäre denkbar, wobei hier - um die Sicht auf die Schneidebene freizuhalten - im Bereich der Kreisbogenabschnitte eine Art Fenster in der Scheibe vorgesehen sein könnte. Die Ausbildung als federnder Bügel ist die einfachere Art.

## Patentansprüche

1. Vorrichtung zum Rasentrimmen, mit einem an einem Antriebsgehäuse (4) angebrachten rotierenden Schneidwerkzeug (1, 2), insbesondere einem Schneidfaden, dessen Rotationsbahn auf einem Umfangsabschnitt von einer Schutzhaube (3) und auf einem gegenüberliegenden Umfangsabschnitt von einem Kreisbogenabschnitt (13) einer Schutzeinrichtung (12) überdeckt ist, die in eine Nichtgebrauchstellung verschwenkbar ist, wobei die Schutzeinrichtung (12) zwischen ihrer Gebrauchstellung und ihrer Nichtgebrauchstellung um eine im wesentlichen zu der Rotationsachse (14) des Schneidfadens (2) parallele Schwenkachse (21) verstellbar ist,
**dadurch gekennzeichnet, dass**
die Schutzeinrichtung (12) federnd am Umfang (18) eines zwischen Antriebsgehäuse und Schutzhaube (3) verlaufenden Schaftes (7) gehalten und um diesen Schaft verschwenkbar ist und die Schutzeinrichtung (12) über zwei Schenkel (10, 11) aus einem elastisch federnden Material verfügt, die in Bogenform so ausgebildet sind, dass sie dem äußeren Umfang des Schaftes (7) auf gegenüberliegenden Seiten in ihrer Krümmung angepasst sind.

2. Vorrichtung nach Anspruch 1, **dadurch gekennzeichnet, dass** die Schutzeinrichtung (12) in der Gebrauchsstellung und in der Nichtgebrauchstellung rastend gehalten ist.

3. Vorrichtung nach Anspruch 1 und 2, **dadurch gekennzeichnet, dass** die Schwenkachse (21) der Schutzeinrichtung gegenüber der Rotationsachse (14) des Schneidfadens geneigt angeordnet ist.

4. Vorrichtung nach Anspruch 3, **dadurch gekennzeichnet, dass** der Neigungswinkel zwischen Rotationsachse (14) und Schwenkachse (21) nicht mehr als 15° beträgt.

5. Vorrichtung nach Anspruch 2, **dadurch gekennzeichnet, dass** die Neigung der Schwenkachse (21) derart gewählt ist, dass der Kreisbogenabschnitt (3) der Schutzeinrichtung (12) in der Gebrauchstellung näher an der von der Rotationsbahn des Schneidfadens (2) bestimmten Schneidebene liegt als in der Nichtgebrauchstellung.

6. Vorrichtung nach Anspruch 2, **dadurch gekennzeichnet, dass** die Schutzeinrichtung (12) federnd am Umfang (18) eines zwischen Antriebsgehäuse und Schutzhaube (3) verlaufenden Schaftes (7) rastend gehalten und um diesen Schaft verschwenkbar ist.

7. Vorrichtung nach den Ansprüche 1 und 2, **dadurch gekennzeichnet, dass** zwischen Antriebsgehäuse (4) und Schutzhaube (3) ein den Schaft (7) umgebender Spalt (9) vorhanden ist, der als Führung für die Schwenkbewegung der Schutzeinrichtung (12) dient.

8. Vorrichtung nach Anspruch 7, **dadurch gekennzeichnet, dass** der Schaft (7) am Umfang mit gegenüberliegenden Vorsprüngen oder Vertiefungen (19) versehen ist, die formschlüssig mit elastisch nachgiebigen Eindellungen (20) an der Schutzeinrichtung (12) zusammenwirken.

9. Vorrichtung nach d en Ansprüche 1 und 2, **dadurch gekennzeichnet, dass** die Schutzeinrichtung als Bügel (12) ausgebildet ist.

10. Vorrichtung nach Anspruch 9, **dadurch gekennzeichnet, dass** der Bügel (12) aus elastisch federndem Material, insbesondere aus Rundmaterial besteht.

11. Vorrichtung nach Anspruch 8, **dadurch gekennzeichnet, dass** die Vorsprünge oder Vertiefungen (19) identisch und diametral gegenüberliegend ausgebildet und so ausgerichtet sind, dass der Kreisbogenabschnitt (13) der Schutzeinrichtung in der Gebrauchsstellung radial über den von der Bedienungsperson abgewandten Teil der Rotationsbahn des Schneidwerkzeugs (1, 2) hinausragt.

12. Vorrichtung nach Anspruch 1, **dadurch gekennzeichnet, dass** die Schutzhaube (3) die Rotationsbahn des Schneidwerkzeuges (1, 2) auf der zur Bedienungsperson weisenden Seite vollständig überdeckt und dass der Kreisbogenabschnitt (13) der Schutzeinrichtung (12) in der Nichtgebrauchstellung innerhalb des Außenrandes der Schutzhaube (3) liegt.

## Claims

1. Lawn trimmer with a cutting tool (1, 2) rotatably mounted on a drive housing (4), in particular a cutting thread, whose rotation path is covered on a circumferential section by a protective cover (3) and is covered on an oppositely facing circumferential section by a circular arcuate section (13) of a protective device (12), which can be swivelled to a not-in-use position, wherein the protective device (12) can between its use position and its not-in-use position be adjusted about a swivel axis (21) substantially parallel to the rotation axis (14) of the cutting thread (2), **characterised in that** the protective device (12) is resiliently retained on the circumference (18) of a shaft (7) running between the drive housing and protective cover (3) and can swivel about this shaft, and the protective device (12) comprises two arms (10, 11) of an elastically resilient material, which are designed having an arcuate shape such that their curvatures on oppositely facing sides match the outer circumference of the shaft (7).

2. Trimmer according to claim 1, **characterised in that** the protective device (12) is held in a catch-like manner in the use position and in the not-in-use position.

3. Trimmer according to claims 1 and 2, **characterised in that** the swivel axis (21) of the protective device is arranged inclined with respect to the rotation axis (14) of the cutting thread.

4. Trimmer according to claim 3, **characterised in that** the angle of inclination between the rotation axis (14) and the swivel axis (21) is not more than 15°.

5. Trimmer according to claim 2, **characterised in that** the inclination of the swivel axis (21) is chosen so that the circular arcuate section (3) of the protective device (12) in the use position is closer to the cutting plane defined by the rotation path of the cutting thread (2), than in the not-in-use position.

6. Trimmer according to claim 2, **characterised in that** the protective device (12) is held resiliently in a catch-like manner on the circumference (18) of a shaft (7) running between the drive housing and protective cover (3) and can swivel about this shaft.

7. Trimmer according to claims 1 and 2, **characterised in that** a gap (9) surrounding the shaft (7) exists between the drive housing (4) and protective cover (3), which gap serves as guidance for the swivelling movement of the protective device (12).

8. Trimmer according to claim 7, **characterised in that** the shaft (7) is provided on its circumference with oppositely facing projections or depressions (19), which co-operate in a positive interlocking manner with elastically flexible indentations (20) on the protective device (12).

9. Trimmer according to claims 1 and 2, **characterised in that** the protective device is designed as a hoop (12).

10. Trimmer according to claim 9, **characterised in that** the hoop (12) consists of elastically resilient material, in particular of circular material.

11. Trimmer according to claim 8, **characterised in that** the projections or depressions (19) are formed identically and diametrically opposite one another and are aligned so that the circular arcuate section (13) of the protective device projects in the use position radially beyond the part of the rotation path of the cutting tool (1, 2) facing away from the person operating the trimmer.

12. Trimmer according to claim 1, **characterised in that** the protective cover (3) completely covers the rotation path of the cutting tool (1, 2) on the side pointing towards the person operating the trimmer, and that the circular arcuate section (13) of the protective device (12) lies in the not-in-use position within the outer edge of the protective cover (3).

## Revendications

1. Débroussailleuse, munie d'un outil de coupe (1, 2) rotatif monté sur un boîtier de commande (4), en particulier un fil de coupe, dont la trajectoire de rotation est recouverte sur un segment périphérique par un capot de protection (3), et sur un segment périphérique opposé par un segment d'arc de cercle (13) d'un dispositif de protection (12) qui est pivotant dans une position d'arrêt, le dispositif de protection (12) étant réglable entre sa position de service et sa position d'arrêt autour d'un axe pivotant (21) sensiblement parallèle par rapport à l'axe de rotation (14) du fil de coupe (2), **caractérisée en ce que**, le dispositif de protection (12) est maintenu résilient sur la périphérie (18) d'une tige (7) s'étendant entre le boîtier de commande et le capot de protection (3), et est pivotant autour de cette tige, et le dispositif de protection (12) dispose de deux montants (10, 11) formés d'un matériau résilient élastique, lesquels sont configurés en forme d'arc, de sorte qu'ils sont adaptés au niveau de leur courbure à la périphérie externe de la tige (7) sur des faces opposées.

2. Débroussailleuse selon la revendication 1, **caractérisée en ce que** le dispositif de protec-tion (12) est maintenu par encliquetage dans la position de service et dans la position d'arrêt.

3. Débroussailleuse selon les revendications 1 et 2, **caractérisée en ce que** l'axe pivotant (21) du dispositif de protection est disposé incliné par rapport à l'axe de rotation (14) du fil de coupe.

4. Débroussailleuse selon la revendication 3, **caractérisée en ce que** l'angle d'inclinaison entre l'axe de rotation (14) et l'axe pivotant (21) ne dépasse pas 15°.

5. Débroussailleuse selon la revendication 2, **caractérisée en ce que** l'inclinaison de l'axe pivotant (21) est sélectionnée de telle sorte que le segment d'arc de cercle (3) du dispositif de protection (12) est plus proche, dans la position de service, du plan de coupe défini par la trajectoire de rotation du fil de coupe (2) que dans la position d'arrêt.

6. Débroussailleuse selon la revendication 2, **caractérisée en ce que** le dispositif de protec-tion (12) est maintenu par encliquetage, résilient, sur la périphérie (18) d'une tige (7) s'étendant entre le boîtier de commande et le capot de protection (3), et est pivotant autour de cette tige.

7. Débroussailleuse selon les revendications 1 et 2, **caractérisée en ce qu'**il existe entre le boîtier de commande (4) et le capot de protec-tion (3) une fente (9) entourant la tige (7), laquelle fente sert de guidage au mouvement pivotant du dispositif de protection (12).

8. Débroussailleuse selon la revendication 7, **caractérisée en ce que** la tige (7) est munie sur la périphérie de saillies ou creux (19) opposés qui coopèrent par ajustement géométrique avec des déformations (20) élastiquement souples situées sur le dispositif de protection (12).

9. Débroussailleuse selon les revendications 1 et 2, **caractérisée en ce que** le dispositif de protection est configuré comme un étrier (12).

10. Débroussailleuse selon la revendication 9, **caractérisée en ce que** l'étrier (12) est formé de matériau résilient élastique, en particulier de ronds.

11. Débroussailleuse selon la revendication 8, **caractérisée en ce que** les saillies ou creux (19) sont conçu(e)s identiques et diamétralement opposé(e)s et sont orienté(e)s de sorte que le segment d'arc de cercle (13) du dispositif de protection dans la position de service dépasse radialement de la partie de trajectoire de rotation de l'outil de coupe (1, 2), située à l'opposé de l'utilisateur.

12. Débroussailleuse selon la revendication 1, **caractérisée en ce que** le capot de protection (3) recouvre entièrement la trajectoire de rotation de l'outil de coupe (1, 2) du côté de l'utilisa-teur, et **en ce que** le segment d'arc de cercle (13) du dispositif de protection (12) se situe dans la position d'arrêt à l'intérieur du bord externe du capot de protection (3).
